**Europäisches Patentamt**

**European Patent Office**

**Office européen des brevets**

(11) Veröffentlichungsnummer: **0 221 406**
**A2**

(12) ## EUROPÄISCHE PATENTANMELDUNG

(21) Anmeldenummer: **86114247.9**

(51) Int. Cl.⁴: **B 01 J 23/89**
**B 01 J 37/02, B 01 D 53/36**

(22) Anmeldetag: **15.10.86**

(30) Priorität: **05.11.85 DE 3539127**

(43) Veröffentlichungstag der Anmeldung:
**13.05.87 Patentblatt 87/20**

(84) Benannte Vertragsstaaten:
**AT BE CH DE FR GB IT LI NL SE**

(71) Anmelder: **HOECHST AKTIENGESELLSCHAFT**
**Postfach 80 03 20**
**D-6230 Frankfurt am Main 80(DE)**

(72) Erfinder: **Vogt, Wilhelm, Dr.**
**Bellerstrasse 74**
**D-5030 Hürth(DE)**

(72) Erfinder: **Glaser, Hermann**
**Magdalenenweg 16**
**D-5042 Erftstadt(DE)**

(72) Erfinder: **Goedicke, Eitel, Dr.**
**Asternweg 7**
**D-5010 Bergheim(DE)**

(54) Verfahren zur Herstellung eines Trägerkatalysators.

(57) Zur Herstellung eines Trägerkatalysators durch Aufbringen von Nichtedelmetall- und Edelmetallkomponenten auf einen keramischen Wabenkörper taucht man den keramischen Wabenkörper zunächst mindestens einmal in eine aus Pseudoböhmit und Zirkonoxidhydrat bestehende wäßrige Suspension ein, trocknet den beschichteten Wabenkörper bei Temperaturen bis 250°C und glüht bei Temperaturen bis 1000°C. Den so beschichteten Wabenkörper imprägniert man mit einer wäßrigen Lösung mindestens eines Eisensalzes sowie gegebenenfalls von Salzen des Nickels und Cers. Den beschichteten und imprägnierten Wabenkörper trocknet man bei Temperaturen bis 250°C und tempert ihn bei Temperaturen bis 600°C. Schließlich imprägniert man den so vorbereiteten Wabenkörper mit einer wäßrigen Lösung, welche mindestens eine lösliche Verbindung eines der Edelmetalle Platin, Rhodium oder Palladium sowie gegebenenfalls eine Cersalz enthält, wobei das Cersalz enthalten sein muß, wenn es bisher fehlte. Den neuerlich imprägnierten Wabenkörper trocknet man bei Temperaturen bis 250°C und tempert ihn bei Temperaturen bis zu 600°C.

EP 0 221 406 A2

Verfahren zur Herstellung eines Trägerkatalysators

Die vorliegende Erfindung betrifft ein Verfahren zur Herstellung eines Trägerkatalysators durch Aufbringen von Nichtedelmetall- und Edelmetallkomponenten auf einen mit einer aus hitzebeständigen Metalloxiden bestehenden Schicht versehenen keramischen Wabenkörper.

Aus der DE-OS 2 212 616 ist ein zur Oxidation von organischen Verbindungen und zur Reduktion von Stickoxiden geeigneter Katalysator bekannt, welcher aus einem inerten keramischen Wabenkörper besteht, auf dem sich eine erste Schicht aus einem hitzebeständigen Metalloxid befindet. Der so beschichtete Wabenkörper ist mit einer Mischung aus Platin, Rhodium und mindestens einem Nichtedelmetall versehen. Der Katalysator wird hergestellt, indem der keramische Wabenkörper in die Suspension des hydrathaltigen hitzebeständigen Metalloxides eingetaucht und anschließend bei Temperaturen von 400 bis 800°C geglüht wird. Der beschichtete Wabenkörper wird in die wäßrige Lösung von Hexachloroplatinsäure und Salzen des Rhodiums und eines Nichtedelmetalles eingetaucht. Schließlich wird der imprägnierte Wabenkörper bei Temperaturen von 150 bis 800°C calciniert.

Bei der Verwendung von Trägerkatalysatoren für die Reinigung von Abgasen von Verbrennungsmotoren durch Oxidation von Kohlenmonoxid und Kohlenwasserstoffen bzw. die Reduktion von Stickoxiden werden ein Anspringen der Reaktionen bei niedriger Temperatur, hohe Reaktionsgeschwindigkeiten auch bei der Abweichung von der stöchiometrischen Gaszusammensetzung sowie Beständigkeit gegen hohe Temperaturen gefordert. Es ist daher Aufgabe der vorliegenden Erfindung, ein Verfahren zur Herstellung eines solchen Trägerkatalysators, welcher durch Aufbringen von Nichtedelmetall- und Edelmetallkomponenten auf einen mit einer aus hitzebeständigem Metalloxid bestehenden Schicht versehenen keramischen Wabenkörper erhältlich ist, anzugeben, der die genannten Forderungen erfüllt. Das wird erfindungsgemäß dadurch erreicht, daß man

a) den keramischen Wabenkörper mindestens einmal in eine aus Pseudoböhmit und Zirkonoxidhydrat bestehende wäßrige Suspension eintaucht, den beschichteten Wabenkörper bei Temperaturen bis 250°C trocknet und bei Temperaturen bis 1000°C glüht,

b) den gemäß a) beschichteten Wabenkörper mit einer wäßrigen Lösung mindestens eines Eisensalzes sowie gegebenenfalls von Salzen des Nickels und Cers imprägniert, den beschichteten und imprägnierten Wabenkörper bei Temperaturen bis 250°C trocknet und bei Temperaturen bis 600°C tempert,

c) den Wabenkörper gemäß b) mit einer wäßrigen Lösung imprägniert, welche mindestens eine lösliche Verbindung eines der Edelmetalle Platin, Rhodium oder Palladium sowie gegebenenfalls ein Cersalz enthält, wobei das Cersalz enthalten sein muß, wenn es in der Lösung gemäß b) fehlte, den neuerlich imprägnierten Wabenkörper bei Temperaturen bis 250°C trocknet und bei Temperaturen bis zu 600°C tempert.

Das Verfahren gemäß der Erfindung kann weiterhin wahlweise auch dadurch ausgestaltet sein, daß

(a) das Gewichtsverhältnis von Pseudoböhmit zu Zirkonoxidhydrat, als Oxide gerechnet, 1 : 0,01 bis 1 : 0,1 beträgt;

(b) die Lösung gemäß c) die Metalle in Form ihrer Chloride und/oder Nitrate enthält und einen pH-Wert von 1 bis 2 aufweist;

(c) die Lösung gemäß c) die Metalle in Form ihrer Komplexe mit substituierten Essigsäuren, vorzugsweise mit Nitrilotriessigsäure oder Ethylendiaminotetraessigsäure, enthält und einen pH-Wert von 8 bis 10 aufweist.

Schließlich kann der gemäß dem erfindungsgemäßen Verfahren hergestellte Trägerkatalysator verwendet werden zur

(d) Oxidation von Kohlenmonoxid und Kohlenwasserstoffen bei Temperaturen oberhalb von 300°C;

(e) Reduktion von Stickoxiden bei Temperaturen oberhalb von 300°C;

(f) Reinigung der Abgase von Brennkraftmaschinen.

Beim Verfahren gemäß der Erfindung kann die Suspendierbarkeit des Pseudoböhmits in Wasser durch Peptisation mit einer Säure, beispielsweise Essigsäure oder Salpetersäure, verbessert werden.

Beim erfindungsgemäßen Verfahren wird das Zirkonoxidhydrat vorteilhafterweise durch Hydrolyse von Zirkonalkoholaten, beispielsweise Zirkon-n-propylat, in der Pseudoböhmit-Suspension erzeugt.

Enthält der mit dem Verfahren gemäß der Erfindung hergestellte Trägerkatalysator Platin und Rhodium, so ist er sowohl zur Oxidation von Kohlenmonoxid und Kohlenwasserstoffen als auch zur Reduktion von Stickoxiden geeignet.

Ein nach dem erfindungsgemäßen Verfahren hergestellter Trägerkatalysator mit Platin und Palladium eignet sich insbesondere für die Oxidation von Kohlenmonoxid und Kohlenwasserstoffen.

Der nach dem Verfahren gemäß der Erfindung hergestellte Trägerkatalysator weist eine solche Aktivität auf, daß durch ihn ein 50 %-Umsatz von Kohlenmonoxid, Kohlenwasserstoffen und Stickoxiden bei $\lambda$ = 1,01 und einer Raumgeschwindigkeit von 50 000 h$^{-1}$ bereits bei Temperaturen von 210 bis 240°C bewirkt wird. Darüber hinaus ist dieser Trägerkatalysator in der Lage, kurzperiodische Abweichungen vom Mittelwert $\lambda$ = 1,01 ohne wesentlichen Aktivitätsverlust auszugleichen.

Die oberen Grenzkonzentrationen für den nach dem erfindungsgemäßen Verfahren hergestellten Trägerkatalysator betragen 30 % $Al_2O_3$, 5 % $ZrO_2$, 3 % $Fe_2O_3$, 3 % $NiO$, 3 % $CeO_2$, 0,5 % Pt, 0,1 % Rh und 0,5 % Pd, bezogen auf das Gewicht des einsatzfertigen Trägerkatalysators.

Beispiel 1   (gemäß der Erfindung)

17,9 kg eines handelsüblichen Pseudoböhmits (®Pural NG; CONDEA CHEMIE AG, Hamburg) wurden unter Rühren in 24,5 kg Wasser eingetragen. Zur Peptisierung wurde dem Ansatz 360 g Essigsäure zugefügt und 2 Stunden gerührt. In die Suspension wurden anschließend 4 kg Zirkontetrapropylat ($ZrO_2$-Gehalt: 28 %) eingerührt, wobei eine sämige, noch gut flüssige Suspension mit einem auf $Al_2O_3$ bezogenen $ZrO_2$-Gehalt von 7,7 % resultierte. Unter Verwendung dieser Suspension wurde ein keramischer Wabenkörper mit einer Schicht aus 17 % $Al_2O_3$ + $ZrO_2$ belegt und 4 Stunden bei 950°C geglüht.

Der beschichtete Wabenkörper, welcher ein Gewicht von 625 g und ein Wasseraufnahmevermögen von 121 ml aufwies, wurde mit 2 l einer sauren Lösung getränkt, welche 316 g $Ce(NO_3)_3 \cdot 6H_2O$ und 335 g $Fe(NO_3)_3 \cdot 9H_2O$ enthielt. Der getränkte Wabenkörper wurde mit Luft von Zimmertemperatur ausgeblasen, mit einem auf 250°C vorgeheizten Heißluftstrom 2 Minuten getrocknet und 2 Stunden bei 600°C getempert. Der zweimal beschichtete Wabenkörper wurde in 2 l einer wäßrigen Lösung getränkt, welche

$$14{,}74 \text{ g } H_2[PtCl_6] \quad \text{(mit 40 \% Pt-Gehalt)}$$
$$3{,}14 \text{ g } RhCl_3 \quad \text{(mit 37,5\% Rh-Gehalt)}$$
$$16 \quad \text{g Nitrilotriessigsäure}$$

enthielt und einen pH-Wert von 10 aufwies. Der getränkte Wabenkörper wurde mit Luft von Zimmertemperatur ausgeblasen, mit einem auf 250°C vorgeheizten Luftstrom 2 Minuten lang getrocknet und 2 Stunden bei 550°C getempert. Nachdem die zuletzt beschriebene Tränkung einschließlich Trocknung und Temperung wiederholt worden war, enthielt der resultierende Katalysator:    1780 ppm Pt

360 ppm Rh

1,19 %    $CeO_2$

0,63 %    $Fe_2O_3$

1,3 %    $ZrO_2$

Beispiel 2   (gemäß der Erfindung)

10,4 kg ®Dispersal 30/3 und 7 kg ®Puralox (beides von CONDEA CHEMIE AG, Hamburg) wurden in 25,4 kg Wasser eingerührt und nach Zugabe von 4 kg Zirkontetrapropylat ($ZrO_2$-Gehalt: 28 %) eine säumige, noch gut flüssige Suspension erhalten. Unter Verwendung dieser Suspension wurde analog Beispiel 1 ein keramischer Wabenkörper mit einer Schicht aus $Al_2O_3$ und $ZrO_2$ versehen.
Der beschichtete Wabenkörper wurde ebenso wie in Beispiel 1 angegeben mit einer weiteren Schicht aus den Oxiden des Cers und Eisens versehen und schließlich mit Platin und Rhodium in gleicher Konzentration belegt.

Beispiel 3   (gemäß der Erfindung)

Ein keramischer Wabenkörper wurde wie in Beispiel 1 angegeben mit $Al_2O_3$ und $ZrO_2$ beschichtet.
Der beschichtete Wabenkörper wurde mit 2 l einer wäßrigen Lösung getränkt, welche   316 g $Ce(NO_3)_3$ . $6H_2O$
335 g $Fe(NO_3)_3$ . $9H_2O$
400 g $Ni(NO_3)_2$ . $6H_2O$
enthielt. Nach Trocknen und Tempern wie in Beispiel 1 angegeben wurde der zweimal beschichtete Wabenkörper analog Beispiel 1 durch zweimalige Tränkung mit Platin und Rhodium belegt.

Der resultierende Katalysator enthielt: 1800 ppm Pt
350 ppm Rh
1,20 %   $CeO_2$
0,63 %   $Fe_2O_3$
0,96 %   NiO
1,26 %   $ZrO_2$

Beispiel 4   (gemäß der Erfindung)

Ein keramischer Wabenkörper wurde wie in Beispiel 1 angegeben mit $Al_2O_3$ und $ZrO_2$ beschichtet.
Der beschichtete Wabenkörper wurde mit 2 l einer wäßrigen Lösung getränkt, welche 335 g $Fe(NO_3)_3$ . $9H_2O$ enthielt.
Nach Trocknen und Tempern wie in Beispiel 1 angegeben wurde der zweimal beschichtete Wabenkörper einmal mit einer Lösung getränkt, welche
316 g $Ce(NO_3)_3$ . $6H_2O$
60,3 g $H_2[PtCl_6]$     (mit 40 % Pt-Gehalt)
12,78g $RhCl_3$     (mit 37,5 % Rh-Gehalt)
enthielt. Trocknung und Temperung wurden analog Beispiel 1 durchgeführt.

Der resultierende Katalysator enthielt:

$$7,6 \quad g \quad CeO_2 \quad = \quad 1,2 \quad \% \quad CeO_2$$
$$4,01 \quad g \quad Fe_2O_3 \quad = \quad 0,63 \quad \% \quad Fe_2O_3$$
$$1,45 \quad g \quad Pt \quad = \quad 2270 \quad ppm \quad Pt$$
$$0,29 \quad g \quad Rh \quad = \quad 450 \quad ppm \quad Rh$$
$$1,3 \quad \% \quad ZrO_2$$

Beispiel 5   (gemäß der Erfindung)

Wie in Beispiel 1 angegeben wurde ein keramischer Wabenkörper zunächst mit einer Schicht aus $Al_2O_3$ und $ZrO_2$ und dann mit einer zweiten Schicht aus $CeO_2$ und $Fe_2O_3$ ver-sehen.

Der zweimal beschichtete Wabenkörper wurde in 2 l einer wäßrigen Lösung getränkt, welche

$$316 \quad g \quad Ce(NO_3)_3 \cdot 6H_2O$$
$$60,3 \quad g \quad H_2[PtCl_6] \quad \text{(mit 40 \% Pt-Gehalt)}$$
$$12,8 \quad g \quad RhCl_3 \quad \text{(mit 37,5 \% Rh-Gehalt)}$$
$$280 \quad g \quad \text{Nitrilotriessigsäure}$$

enthielt und einen pH-Wert von 10 aufwies. Trocknen und Tempern erfolgte analog Beispiel 1.

Der resultierende Katalysator enthielt: 1800 ppm Pt
$$370 \quad ppm \quad Rh$$
$$0,6 \quad \% \quad Fe_2O_3$$
$$2,2 \quad \% \quad CeO_2$$
$$1,25 \quad \% \quad ZrO_2$$

Beispiel 6   (Vergleichsbeispiel)

Beispiel 1 wurde mit der Änderung wiederholt, daß der Wabenkörper nur mit einer Suspension aus peptisierten Pseudoböhmit behandelt und daher mit einer nur aus $Al_2O_3$ bestehenden Schicht versehen wurde.

Der resultierende Katalysator enthielt: 1810 ppm Pt
380 ppm Rh
1,2 % $CeO_2$
0,65 % $Fe_2O_3$

Aus den Katalysatoren gemäß den Beispielen 1 bis 6 wurden Bohrlinge mit einem Durchmesser von 2,5 cm und 7,52 cm Länge geschnitten. Über jeden Bohrling wurde mit einer Raumbelastung von 50 000 $h^{-1}$ ein Gasstrom geleitet, welcher aus

| 73,5 | Vol.% | $N_2$ |
|---|---|---|
| 14,0 | " | $CO_2$ |
| 0,33 | " | $H_2$ |
| 0,99 | " | $CO$ |
| 1,0 | " | $O_2$ |
| 9,97 | " | $H_2O$-Dampf |
| 500 | ppm | $C_3H_6$ |
| 1000 | ppm | $NO_x$ |

bestand. Es wurden die Temperaturen bestimmt, bei welchen 50 % des im Gasgemisch enthaltenen Kohlenmonoxids, des Kohlenwasserstoffes (KW) und der Stickoxide umgesetzt waren (vergl. Tabelle 1).

Aus den Katalysatoren gemäß den Beispielen 1 bis 6 wurden Bohrlinge mit einem Durchmesser von 2,5 cm und 5 cm Länge geschnitten. Die Bohrlinge wurden zunächst in einem Gasstrom aus 90 % Stickstoff und 10 % Wasserdampf bei 980°C 4 Stunden gealtert.

Jeder gealterte Bohrling wurde bei einer Raumbelastung von 75 000 $h^{-1}$ mit einer Gasbelastung beaufschlagt, welche mit einer Schwankungsbreite von $\pm$ 0,054 periodisch um das Mittel des $\lambda$-Wertes 1,01 schwankte, wobei bei einer Temperatur von 400°C und einer Pulsationsfrequenz von 1/2 und 1 Hertz gemessen wurde (vergl. Tabelle 2).

Tabelle 1

50 % Umsatz $[°C]$

| Katalysator gemäß Beispiel | 1 | 2 | 3 | 4 | 5 | 6 |
|---|---|---|---|---|---|---|
| CO | 200 | 195 | 205 | 200 | 195 | 275 |
| KW | 210 | 205 | 220 | 215 | 210 | 270 |
| $NO_x$ | 230 | 230 | 235 | 230 | 235 | 275 |

Tabelle 2

Periodische Variation des $\lambda$-Wertes $[\% \text{ Umsatz}]$

| Katalysator gemäß Beispiel | 1 | 2 | 3 | 4 | 5 | 6 |
|---|---|---|---|---|---|---|
| Taktfrequenz 1/2 Hertz | | | | | | |
| CO | 97 | 96 | 99 | 95 | 96 | 79 |
| KW | 98 | 97 | 95 | 94 | 95 | 100 |
| $NO_x$ | 98 | 96 | 90 | 91 | 92 | 81 |
| Taktfrequenz 1 Hertz | | | | | | |
| CO | 99 | 98 | 100 | 96 | 96 | 91 |
| KW | 100 | 100 | 97 | 95 | 95 | 100 |
| $NO_x$ | 98 | 99 | 94 | 92 | 93 | 82 |

Verfahren zur Herstellung eines Trägerkatalysators

Patentansprüche:

1. Verfahren zur Herstellung eines Trägerkatalysators
   durch Aufbringen von Nichtedelmetall- und Edelmetallkomponenten auf einen mit einer aus hitzebeständigen
   Metalloxiden bestehenden Schicht versehenen keramischen
   Wabenkörper, dadurch gekennzeichnet, daß man

   a) den keramischen Wabenkörper mindestens einmal
      in eine aus Pseudoböhmit und Zirkonoxidhydrat
      bestehende wäßrige Suspension eintaucht, den beschichteten Wabenkörper bei Temperaturen bis
      250°C trocknet und bei Temperaturen bis 1000°C
      glüht,

   b) den gemäß a) beschichteten Wabenkörper mit einer wäßrigen Lösung mindestens eines Eisensalzes sowie gegebenenfalls von Salzen des Nickels
      und Cers imprägniert, den beschichteten und imprägnierten Wabenkörper bei Temperaturen bis
      250°C trocknet und bei Temperaturen bis 600°C
      tempert,

   c) den Wabenkörper gemäß b) mit einer wäßrigen Lösung imprägniert, welche mindestens eine lösliche Verbindung eines der Edelmetalle Platin,
      Rhodium oder Palladium sowie gegebenenfalls ein
      Cersalz enthält, wobei das Cersalz enthalten sein
      muß, wenn es in der Lösung gemäß b) fehlte, den
      neuerlich imprägnierten Wabenkörper bei Temperaturen bis 250°C trocknet und bei Temperaturen
      bis zu 600°C tempert.

2. Verfahren nach Anspruch 1, dadurch gekennzeichnet, daß das Gewichtsverhältnis von Pseudoböhmit zu Zirkonoxidhydrat, als Oxide gerechnet, 1 : 0,01 bis 1 : 0,1 beträgt.

3. Verfahren nach Anspruch 1 oder 2, dadurch gekennzeichnet, daß die Lösung gemäß c) die Metalle in Form ihrer Chloride und/oder Nitrate enthält und einen pH-Wert von 1 bis 2 aufweist.

4. Verfahren nach Anspruch 1 oder 2, dadurch gekennzeichnet, daß die Lösung gemäß c) die Metalle in Form ihrer Komplexe mit substituierten Essigsäuren, vorzugsweise mit Nitrilotriessigsäure oder Ethylendiaminotetraessigsäure, enthält und einen pH-Wert von 8 bis 10 aufweist.

5. Verwendung des nach dem Verfahren gemäß den Ansprüchen 1 bis 4 hergestellten Trägerkatalysators zur Oxidation von Kohlenmonoxid und Kohlenwasserstoffen bei Temperaturen oberhalb von 300°C.

6. Verwendung des nach dem Verfahren gemäß den Ansprüchen 1 bis 4 hergestellten Trägerkatalysators zur Reduktion von Stickoxiden bei Temperaturen oberhalb von 300°C.

7. Verwendung nach den Ansprüchen 5 und 6 zur Reinigung der Abgase von Brennkraftmaschinen.